# EUROPÄISCHE PATENTSCHRIFT

(11) **EP 1 635 038 B1**
(45) Veröffentlichungstag und Bekanntmachung des Hinweises auf die Patenterteilung: **19.10.2011**
(21) Anmeldenummer: 05016926.7
(22) Anmeldetag: 04.08.2005
(51) Int. Cl.: F01D 5/14, F01D 17/16, F02C 6/12

(54) **Abgasturbolader**
Exhaust turbocharger
Turbocompresseur d'échappement

(30) Priorität: 10.09.2004 DE 102004044324
(43) Veröffentlichungstag der Anmeldung: 15.03.2006
(73) Patentinhaber: Bayerische Motoren Werke Aktiengesellschaft, 80809 München (DE)
(72) Erfinder: Jursitzky, Christian, 44441 Behamberg (AT); Plösser, Thomas, 3321 Ardagger (AT); Wichtl, Rudolf, 4451 Garsten (AT); Hofer, Raphael, 4451 Garsten (AT)

(56) Entgegenhaltungen:
- EP-A- 0 719 944
- US-A- 4 770 603
- US-A- 5 564 895
- US-A1- 2003 079 474
- US-B1- 6 461 105
- ARND WOLFRAM REICHERT: "Optimierte leitschaufeln fuer zentrilpetalturbinen" STROEMUNGSSIMULATIONEN ZUR OPTIMIERTEN GESTALTUNG VON TURBOMASCHINENKOMPONENTEN, 1995, Seiten 81-117, XP002242093

## Beschreibung

Die Erfindung betrifft einen Abgasturbolader mit den Merkmalen gemäß dem Oberbegriff des Patentanspruchs 1.

Aus dem Artikel "Optimierte Leitschaufeln für Zentripetalturbinen" von Arnd Wolfram Reichert, von dem diese Erfindung ausgeht, ist eine Zentripetalturbine für den stationären Einsatz in verfahrenstechnischen Anlagen der Petrochemie und für Luftzerlegungsanlagen bekannt. Die Turbine weist eine variable Turbinengeometrie auf mit drehbar angeordneten Leitschaufeln, wobei die Leitschaufel ausgehend von einer Drehachse einen Vorlaufbereich und einen Nachlaufbereich aufweist, deren Verhältnis kleiner 0,54 ist.

Aus dem US Patent 6,461,105 ist eine Leitschaufel für eine Gas-Turbine mit einer variablen Einlassgeometrie bekannt. Auch die hier vorgeschlagene Leitschaufel weist, ausgehend von einer Drehachse, einen Vorlaufbereich und einen Nachlaufbereich auf, deren Verhältnis kleiner 0,54 ist.

Aus dem US Patent 4,770,603 ist ein Abgasturbolader bekannt mit einer Turbine mit einer variablen Einlassgeometrie. Auch die hier vorgeschlagene Leitschaufel weist, ausgehend von einer Drehachse, einen Vorlaufbereich und einen Nachlaufbereich auf, deren Verhältnis kleiner 0,54 ist.

Aus dem US Patent 5,564,895 ist eine Radialturbine bekannt mit einer variablen Einlassgeometrie. Auch die hierfür vorgesehene Leitschaufel weist, ausgehend von einer Drehachse, einen Vorlaufbereich und einen Nachlaufbereich auf, deren Verhältnis kleiner 0,54 ist.

Nachteilig an den o. g. Ausgestaltungen ist eine Hysterese die beim Verstellen der Leitschaufeln vorliegt, d. h. ein Über- bzw. Unterschwingen bezüglich der Endstellung der Leitschaufeln nach einer Verstellung. Hierdurch kann der Ladedruck an der Brennkraftmaschine nicht immer zuverlässig eingestellt werden.

Aufgabe der vorliegenden Erfindung ist es, eine Leitschaufelgeometrie aufzuzeigen, durch die die Hysterese deutlich reduziert wird.

Diese Aufgabe wird durch die Merkmale im kennzeichnenden Teil des Patentanspruchs 1 gelöst.

Durch die erfindungsgemäße Ausgestaltung wird die Hysterese bei Schalt-, bzw. Verstellvorgängen deutlich reduziert, wodurch die Auslegung einer konventionellen Motorsteuerung möglich ist.

Diese Aufgabe wird durch das Merkmal im kennzeichnenden Teil des Patentanspruchs 1 dadurch gelöst, dass das Verhältnis von Vorlaufbereichslänge zu Nachlaufbereichslänge kleiner oder gleich 0,54 ist. Durch die erfindungsgemäße Ausgestaltung wird die Hysterese bei Schalt-, bzw. Verstellvorgängen deutlich reduziert, wodurch die Auslegung einer konventionellen Motorsteuerung möglich ist.

Eine vorteilhafte Ausgestaltung ist Gegenstand des Unteranspruchs.

Im Folgenden ist die Erfindung anhand von 2 Figuren näher erläutert:
- Fig. 1: zeigt die grundsätzlichen Größenverhältnisse von Vorlauf- und Nachlaufbereich einer erfindungsgemäßen Leitschaufel,
- Fig. 2: zeigt ein konkretes Ausführungsbeispiel.

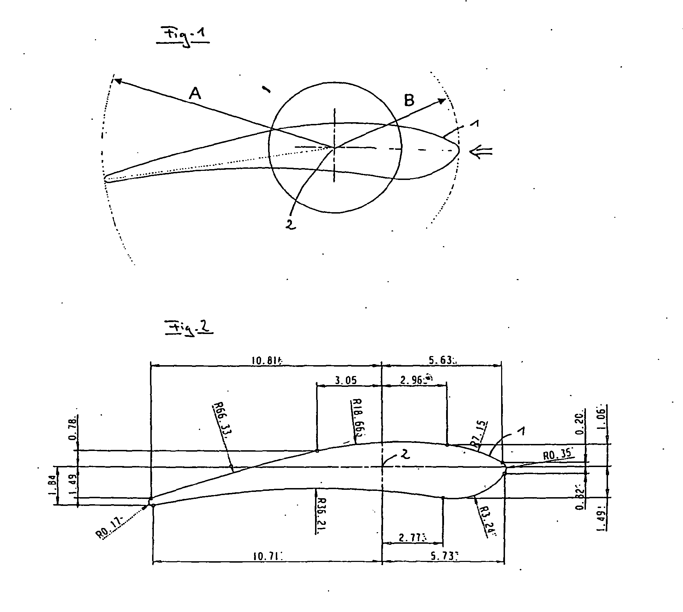

Fig. 1 zeigt schematisch einen Schnitt durch eine Leitschaufel 1. Die Leitschaufel 1 hat ein in etwa tragflügelähnliches Profil und ist um eine Drehachse 2 drehbar gelagert. In Strömungsrichtung, die durch einen Doppelpfeil dargestellt ist, werden zwei Bereiche der Leitschaufel 1 definiert. Erstens der Bereich von der Spitze der Leitschaufel bis zur Drehachse, dem Vorlaufbereich B und zweitens der Bereich von der Drehachse bis zum Ende der Leitschaufel, der Nachlaufbereich A.

Das Verhältnis von B zu A ist kleiner als 0,54.

Die Bezugszeichen von Fig. 1 gelten auch für die Fig. 2. In Fig. 2 ist ein konkretes Ausführungsbeispiel einer erfindungsgemäßen Leitschaufel 1 dargestellt. Eine Außenkontur der Leitschaufel 1 ist jeweils durch 7 aneinander gehängte Radien definiert. Das Ausführungsbeispiel in Fig. 2 weist eine Außenkontur der Leitschaufel auf, die radial um die Drehachse sieben Radien umfasst, wobei sich an eine konvexe Vorlaufsbereichsverrundung von 0,35 mm ein konvexer Radius von 3,25 mm und weiter ein konkaver Radius von 36,22 mm und weiter eine konvexe Nachlaufsbereichsverrundung von 0,18 mm und weiter ein konvexer Radius von 66,33 mm und weiter ein konvexer Radius von 18,67 mm und weiter ein konvexer Radius von 7,15 mm anschließt.

Durch die erfindungsgemäße Ausgestaltung wird die Hysterese der Leitschaufel 1 bei einer Verstellung reduziert. Aufgrund der geometrischen Ausgestaltung gemäß Fig. 2 liegen definierte Kraftverhältnisse an der Leitschaufel vor, wodurch der Verschleiß verringert wird. Darüber hinaus werden durch die geometrische Ausgestaltung gute Wirkungsgrade im Leitgitter realisiert. Durch die deutliche Reduzierung der Hysterese kann die Auslegung entsprechend einer konventionellen Motorsteuerung erfolgen, speziell bei hohen spezifischen Brennkraftmaschinenleistungen.

## Patentansprüche

1. Abgasturbolader mit einer Abgasturbine mit einer variablen Turbinengeometrie, die zumindest eine um eine Drehachse (2) drehbare Leitschaufel (1) umfasst, wobei die Drehachse (2) weitgehend senkrecht zu einer Strömungsrichtung ausgerichtet ist und wobei die Leitschaufel (1) ausgehend von der Drehachse (2) entgegen der Strömungsrichtung einen Vorlaufbereich und in der Strömungsrichtung einen Nachlaufbereich aufweist, wobei das Verhältnis von Vorlaufbereichslänge (B) zu Nachlaufbereichslänge (A) kleiner oder gleich 0,54 ist und wobei zur Drehachse (2) senkrecht ausgerichtete Flächen der Leitschaufel (1) weitgehend eben sind,
**dadurch gekennzeichnet, dass** eine Außenkontur der Leitschaufel (1) radial um die Drehachse (2) von sieben zylindrischen Oberflächen gebildet ist deren Längsachsen parallel zur Drehachse (2) ausgerichtet sind, wobei die zylindrischen Oberflächen sieben Radien aufweisen und wobei sich an eine konvexe Leitschaufelkopfverrundung von 0,35 mm, die sich ausgehend von der Drehachse (2) über 6° erstreckt ein konvexer Radius von 3,25 mm, der sich ausgehend von der Drehachse (2) über 25° erstreckt und weiter ein konkaver Radius von 36,22 mm, der sich ausgehend von der Drehachse (2) über 143° erstreckt und weiter eine konvexe Leitschaufelendverrundung von 0,18 mm, die sich ausgehend von der Drehachse (2) über 2° erstreckt und weiter ein konvexer Radius von 66,33 mm, der sich ausgehend von der Drehachse (2) über 23° erstreckt und weiter ein konvexer Radius von 18,67 mm, der sich ausgehend von der Drehachse (2) über 143° erstreckt und weiter ein konvexer Radius von 7,15 mm, der sich ausgehend von der Drehachse (2) über 18° erstreckt, anschließt, wobei der konvexe Radius von 7,15 mm direkt in die Leitschaufelspitzenverrundung von 0,35 mm übergeht.

## Claims

1. A turbocharger comprising a variable-geometry exhaust gas turbine having at least one guide vane rotatable around an axis (2), wherein the axis (2) is aligned substantially at right angles to a direction of flow and wherein the guide vane (1), starting from the axis (2), has a forward region opposite the direction of flow and a return region in the direction of flow, wherein the length (B) of the forward region relative to the length (A) of the return region is less than or equal to 0.54 and wherein surfaces of the guide vane (1) at right angles to the axis (2) are substantially flat, **characterised in that** an outer contour of the guide vane (1) is formed by seven cylindrical surfaces radially round the axis (2), their longitudinal axes being aligned parallel with the axis (2), wherein the cylindrical surfaces have seven radii and wherein a convex radius of 3.25 mm, extending over 25° starting from the axis (2), adjoins a convex 0.35 mm round portion on the head of a guide vane extending over 6° starting from the axis (2), together with a concave radius of 36.22 mm, extending over 143° starting from the axis (2), and a convex round portion of 0.18 mm on the end of a guide vane extending over 2° starting from the axis (2) and a convex radius of 66.33 mm extending over 23° starting from the axis (2) and
a convex radius of 18.67 mm extending over 143° starting from the axis (2) and another adjoining convex radius of 7.15 mm extending over 18° starting from the axis (2), wherein the convex radius of 7.15 mm merges directly into the 0.35 mm round portion on the tip of a guide vane.

## Revendications

1. Turbocompresseur d'échappement comportant une turbine à gaz à géométrie de turbine variable ayant au moins une aube directrice (1) pivotant autour d'un axe de rotation (2),
* l'axe de rotation (2) étant pratiquement perpendiculaire à la direction du flux, et
* partant de l'axe de rotation (2) et dans la direction opposée à la direction du flux, l'aube directrice (1) présente une zone avant et dans la direction du flux, une zone arrière,
* le rapport entre la longueur (B) de la zone avant et la longueur (A) de la zone arrière est inférieur ou égal à 0,54, et
* les surfaces de l'aube directrice (1) perpendiculaire à l'axe de rotation (2) sont pratiquement planes,
turbocompresseur **caractérisé en ce que** radialement autour de l'axe de rotation (2), le contour extérieur de l'aube directrice (1), est formé par sept surfaces cylindriques dont les axes longitudinaux sont parallèles à l'axe de rotation (2),
* les surfaces cylindriques ayant sept rayons, et
* à partir d'un arrondi convexe de tête d'aube, de 0,35 mm s'étendant à partir de l'axe de rotation (2) sur un angle de 6°, un rayon convexe de 3,25 mm s'étend en partant de l'axe de rotation (2) sur 25° et ensuite un rayon concave de 36,22 mm s'étend à partir de l'axe de rotation (2) sur 143° et ensuite un arrondi convexe d'extrémité de l'aube directrice de 0,18 mm qui, partant de l'axe de rotation (2), s'étend sur 2° et ensuite un rayon convexe de 66,33 mm s'étend en partant de l'axe de rotation (2) sur 23° et ensuite un rayon convexe de 18,67 mm s'étend en partant de l'axe de rotation (2) sur 143° et ensuite un rayon convexe de 7,15 mm s'étend en partant de l'axe de rotation (2) sur 18°,
* le rayon convexe de 7,15 mm rejoignant directement l'arrondi de la pointe de l'aube directrice qui est de 0,35 mm.
